# EUROPEAN PATENT SPECIFICATION

(11) **EP 1 574 256 B1**
(45) Date of publication and mention of the grant of the patent: **07.10.2009**
(21) Application number: 05010274.8
(22) Date of filing: 31.01.2001
(51) Int. Cl.: B01L 3/02

(54) **A pipette with tip ejector**
Pipette mit Spitzenabwurf
Pipette avec ejecteur de pointe

(30) Priority: 03.02.2000 US 497829
(43) Date of publication of application: 14.09.2005
(62) Divisional of application: 01905372.7
(73) Proprietor: Rainin Instrument LLC., Oakland, CA 94621 (US)
(72) Inventor: Magnussen, Haakon T. Jr., Orinda, CA 94563 (US); Yee, Philip, San Francisco, CA 94122 (US); Wang, Albert Y., Emeryville, CA 94608 (US)
(74) Representative: Manitz, Finsterwald & Partner GbR

(56) References cited:
- EP-A- 0 421 785
- DE-C1- 19 845 950

## Description

This invention relates to a pipette device for use a pipette lip and more particularly to pipette devices having mechanisms for ejecting removably mounted tips.

Most hand held manual or electronic pipettes have a mechanism for ejecting a disposable tip secured to the shaft of the pipette. Prior to the recently developed LTS System of the Rainin Instrument Co., Inc. of Emeryville, California, which is characterized by pipette tip mounting and ejection forces of less than one pound, the static holding friction or mounting forces required for retaining a tip in a fluid tight sealed condition on the shaft of a pipette is typically greater than four to six pounds in order to withstand the lateral forces exerted on the tip during touching off in normal pipetting activities. During pipette tip ejection such frictional retention or mounting forces must be overcome in order to start moving the tip off of the shaft. The required peak pipette tip ejection force is typically in the range of eight to twelve pounds, but can be as high as 20 pounds. Once the tip begins to move off of the pipette shaft, the force required to continue moving the tip reduces to approximately 50% to 60% of the frictional retention force.

One common tip ejector mechanism is a spring biased rod with a thumb actuated button on its upper end. The lower end of the rod is secured to a collar positioned adjacent the upper end of the disposable tip. See, for example, U.S. Patent No. 3,991,617 and U.S. Re. 32,210. When the user presses down on the button, the lower end of the collar presses against the tip. The user must supply an ejection force which equals or exceeds the frictional retention force in order to eject the tip from the shaft of the pipette. Most users do not have sufficient time following movement of the tip down the shaft to reduce the applied ejection force from the initial ejection force. Instead, the user continues to exert the peak ejection force until the ejector impacts the bottom stop of the tip ejector mechanism. Static stress on the order or eight to twelve pounds followed by a rapid movement and a sudden stop, causing an impact on the thumb, can contribute to repetitive motion injuries to the hand and wrist when repeated many times daily over long periods of time.

Several different approaches have been used to reduce the stress in a user's thumb or finger(s) from tip ejection forces. One such approach is to use a mechanical advantage, for example by means of cams, gears or a lever mechanism, to reduce the forces required to eject a tip. See for example U.S. Patent Nos. 4,779,467 and 5,435,197. These reduced forces, however, come at the expense of additional motion required by the user's thumb or finger(s). The total energy or work supplied by the user's thumb or finger(s) is at least as much as that required for the traditional push rod mechanism. Furthermore, practical designs are limited to a mechanical advantage of 2:1, because of limitations on the accompanying travel distances and time, and are thus capable of reducing the forces only by a factor of two. Another approach is to reduce the frictional retention force holding the tip on the pipette shaft. One such solution uses an O-ring on the shaft to form a soft, compliant seal with the inside surface of the tip. See in this regard the *Transferpette* multichannel pipettes from BrandTech Scientific Inc. of Essex, Connecticut. Unfortunately, the lower retention force provided by such O-ring seals come at the cost of reduced sealing reliability and increased maintenance as well as increased possibilities of contamination.

Other approaches for reducing tip ejection forces focus on the tip. For example, U.S. Patent Nos. 4,072,330 and 4,748,859 disclose a disposable tip with increased compliance for decreasing frictional retention force. These devices, however, suffer from decreased lateral tip stability.

Another approach uses a motor driven tip ejector mechanism. See for example U.S. Patent No. 4,399,712. This approach minimizes stress on the user's thumb or finger(s), but suffers from disadvantage that the direct drive must have sufficient strength to generate the peak force required to eject a tip without stalling or causing undue wear on the mechanism. In addition, excess stroke distance must be provided at the end of the normal pipette cycle to eject the tip. As a result, additional head space volume must be added to accommodate the extra piston stroke distance and the pipette body must be lengthened. Another motorized ejector mechanism is described in U.S. Patent No. 4,616,514 and utilizes a proprietary tip design having a soft seal on the end of the tip for improved sealing and easy tip ejection.

As can be seen from the foregoing, many of the current solutions for minimizing the stress on the hand and/or wrist of a pipette user from tip ejection have accompanying disadvantages. It would be desirable to develop a new pipette which overcomes these disadvantages.

In order to overcome the above disadvantages there is provided, in accordance with the present invention, a pipette for use with a pipette tip to aspirate and dispense a quantity of liquid comprising a housing, a pipette tip mounting shaft extending longitudinally from the housing for insertion into an open proximal end of the pipette tip to frictionally mount and retain the tip on a distal end of the shaft and a user actuated pipette tip ejector assembly including an extremity mounted to move longitudinally relative to the mounting shaft and having a distal end portion for engaging the proximal end of the pipette tip when frictionally retained on a distal end of the pipette tip mounting shaft and to move longitudinally relative to the shaft and toward the distal end of the shaft to eject the tip from the mounting shaft by overcoming the frictional retention of the tip on the shaft, the pipette being characterized by a mechanism that reduces user generated forces required to actuate the pipette tip ejector assembly and eject the pipette tip from the pipette tip mounting shaft and that comprises: an energy storage spring which stores energy when the tip is mounted an said shaft and which releases the stored energy when the tip is to be removed to facilitate the removal thereof; an ejector in the pipette tip ejector assembly responsive to the mounting of the tip on a distal end of the shaft for compressing the energy storage spring and storing energy in the spring; retaining means for retaining the compression of and energy in the energy storage spring; and a release assembly which when the ejector is pushed towards the pipette tip selectively releases the retaining means and the energy from the energy storage spring to the ejector to move the ejector against the tip to assist the tip ejector assembly in (i) overcoming the frictional retention of the pipette tip on the mounting shaft and (ii) the ejection of the pipette tip from the mounting shaft.

In this connection, reference should also briefly be made to EP-A-0421785. This document discloses a pipette for picking up, holding and then ejecting a pipette tube without touching the pipette tube with the hands. The tube is a glass tube, which is held inside a collet chuck and the danger exists that the glass tube, which may be contaminated, for example with Aids, breaks and that the user infects himself in trying to remove the glass tube from the chuck. In order to avoid this, the act of engaging a glass tube within the collet chuck is used to store energy in an ejection spring and, once the glass tube has been inserted to the required depth within the collet chuck, the fingers of the collet chuck are closed around the glass tube by a further spring used to clamp an axially movable sleeve against the fingers of the chuck. To release the glass tube, the user has to exert manual force to overcome the clamping spring used to clamp the fingers of the collet chuck around the glass tube and the energy stored in the ejection spring is then released on opening the collet chuck to eject the glass tube from the collet chuck. The ejection spring itself is not required to overcome significant friction forces and does not reduce the level of forces which are to be exerted by the user to withdraw the collet finger clamping sleeve.

### BRIEF DESCRIPTION OF THE DRAWINGS

Several preferred embodiments of the invention are set forth in detail in the accompanying schematic drawings in which
FIG. 1 is a side elevational view of a partially cross-sectioned pipette device with tip ejector utilizing stored energy in accordance with the present invention, the pipette device being without a disposable tip mounted on a shaft of the device.
FIG. 2 is a fragmentary and partially cross-sectioned view of the pipette device of FIG. 1 with a disposable tip mounted on the shaft of the pipette device.
FIG. 3 is a cross-sectional view of the pipette device of FIG. 1 taken along the line 3-3 of FIG. 2.
FIG. 4 is a cross-sectional view of the pipette device of FIG. 1 taken along the line 4-4 of FIG. 2.
FIG. 5 is a fragmentary and partially cross-sectioned view of the pipette device of FIG. 1 in a first tip ejection condition following actuation of an eject button.
FIG. 6 is a fragmentary and partially cross-sectioned view of the pipette device of FIG. 1 in a second ejection condition following release of an eject rod.
FIG. 7 is a fragmentary and partially cross-sectioned view of the pipette device of FIG. 1 in a third ejection condition following actuation of the eject rod by the eject button.
FIG. 8 is a fragmentary and partially cross-sectioned view of another embodiment of a pipette device with tip ejector utilizing stored energy in accordance with the present invention, the pipette device having no tip mounted thereon.
FIG. 9 is a fragmentary and partially cross-sectioned view of the pipette device of FIG. 8 with a disposable tip mounted on the shaft of the pipette device.
FIG. 10 is a fragmentary and partially cross-sectioned view of the pipette device of FIG. 8 in a first tip ejection condition following actuation of the eject button and release of the lock pin.
FIG. 11 is a fragmentary and partially cross-sectioned view of the pipette device of FIG. 8 in a second ejection condition following disengagement of the eject rod.
FIG. 12 is a fragmentary and partially cross-sectioned view of the pipette device of FIG. 8 in a third ejection condition following manual actuation of the eject rod by the eject button.
FIG. 13 is a fragmentary and partially cross-sectioned view of another embodiment of a pipette device with tip ejector utilizing stored energy in accordance with the present invention, the pipette device having no tip mounted thereon.
FIG. 14 is a fragmentary and partially cross-sectioned view of the pipette device of FIG. 13 with a disposable tip mounted on the shaft of the pipette device.

Reference will now be made in detail to the preferred embodiments of the invention which are illustrated in the accompanying figures. The description of each embodiment of the invention will be followed by a discussion of its operation.

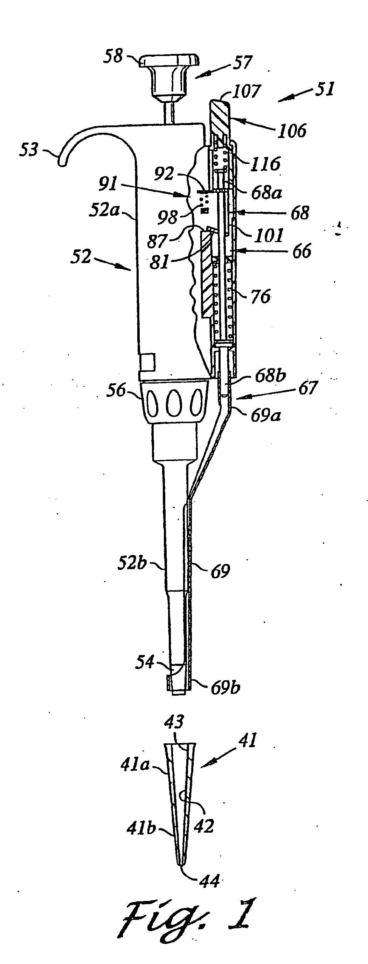

As illustrated in FIGS. 1-7, in one embodiment of the pipette with tip ejector utilizing stored energy in accordance with the present invention, a pipette 51 formed from a housing 52 having a handle 52a and a shaft 52b is provided. The pipette 51 is for use with a conventional tip 41 of the type manufactured by Rainin Instrument Co., Inc. of Emeryville, California. An ejector assembly 66 is carried by the housing 52 for pushing tip 41 off of the distal end of the housing 52. The ejector assembly includes an eject spring 76 which is compressed to store energy under the force of an ejector 67 when a user mounts the tip 41 onto the distal end portion of the shaft 52b. The ejector assembly further includes locking means for retaining the eject spring in its compressed condition and release means actuatable by the user to release the ejector 67 which is then driven by the eject spring 76 to push the tip 41 off of the distal end portion of the pipette.

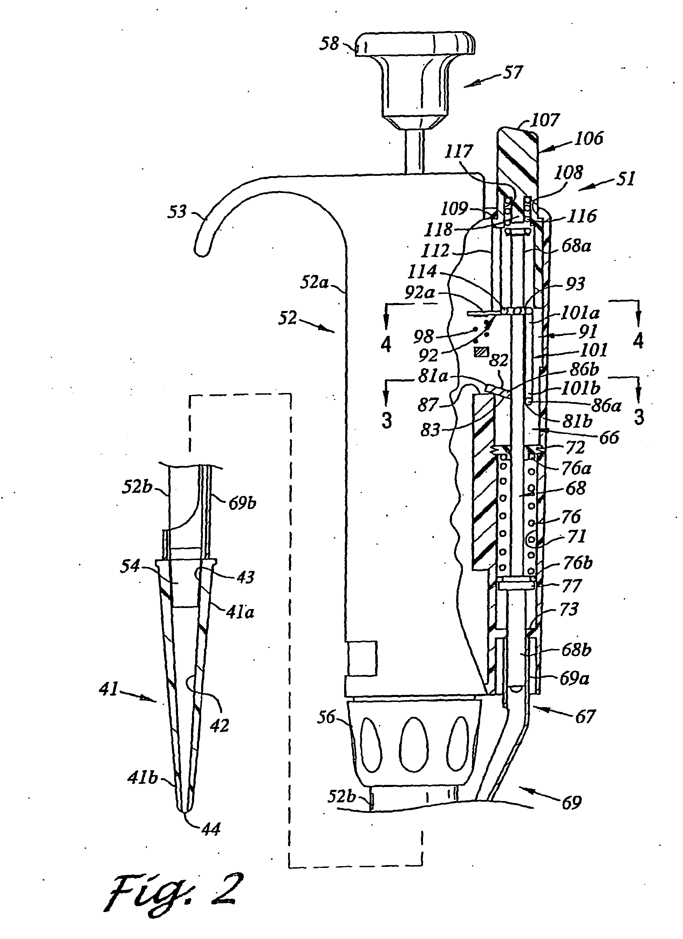

More specifically, tip 41 is generally conical in shape and made from any suitable material such as plastic and preferably clear plastic. As depicted in FIGS. 1 and 2, where tip 41 is shown in cross section, a generally conical bore 42 commences at an opening 43 provided at the proximal end 41a of the tip. Bore 42 reduces in diameter as it extends from proximal opening 43 to a distal opening 44 formed in distal end 41b of the tip.

Pipette 51 is for use with a human hand to repeatedly aspirate and dispense a predetermined quantity of liquid and includes the hollow body or housing 52 having a first extremity or handle portion 52a adapted to be grasped by the hand of the user and a second extremity or shaft portion 52b adapted to removably receive the pipette tip 41 (see FIGS. 1-7). Handle portion or handle 52a is substantially cylindrical in shape and is sized to be held within a human hand. More particularly, handle 52a is sized so that the user's hand wraps substantially around the handle. An arcuate extension or finger hook 53 extends from one side of the top of handle 52a for facilitating retention of the pipette in the hand of the user. Shaft portion or shaft 52b is substantially cylindrical in shape and it has a diameter which is smaller than the diameter of handle 52. A substantially cylindrical end portion or distal end 54 of shaft 52b is sized so as to fit within the proximal end 41a of pipette tip 41, which is press fit onto the shaft distal end portion 54. Handle 52a and shaft 52b are aligned on a longitudinal or vertical axis of pipette 51. Shaft 52b is secured to handle 52a by any suitable means such as annular nut 56. Each of handle 52a, shaft 52b and nut 56 are made from any suitable material such as plastic.

A bore (not shown) extends through shaft 52b and communicates with an opening (not shown) in distal end 54 for providing suction or pressure to respectively aspirate or dispense a liquid from the pipette tip 41 when secured to the distal end portion 54 of the shaft 52b. Manual pipette 51 has means actuatable from handle 52a for so aspirating the liquid into and dispensing such liquid from the pipette tip 41. Such means includes a plunger 57 slidably disposed within handle 52a and accessible from the top of the handle. A knob 58 is secured to the top free end of plunger 57 for facilitating manual actuation of the aspirating and dispensing means of pipette 51.

The finger-operable ejector assembly 66 is carried by housing 52 for pushing pipette tip 41 off distal end portion 54 and includes an ejector mechanism or ejector 67 having a first extremity or rod 68 slidably disposed within housing handle 52a and a second extremity or extension 69 extending alongside shaft 52b exterior of housing 52. Elongate rod 68 is cylindrical in shape and has a first or proximal end portion 68a and a second or distal end portion 68b and is made from metal or any other suitable material. Eject rod 68 extends along an axis that is parallel to the vertical axis of pipette 51. Extension 69 is made from any suitable material such as metal and has a first or proximal end portion 69a and a second or distal end portion 69b. The proximal end portion of extension 69 is substantially tubular in conformation and is press fit or otherwise suitably secured around distal end portion 68b of the rod 68. Distal end portion or collar 69b of the extension 69 is also substantially tubular in conformation and is disposed about distal end portion 54 of the shaft 52b for vertical movement thereon.

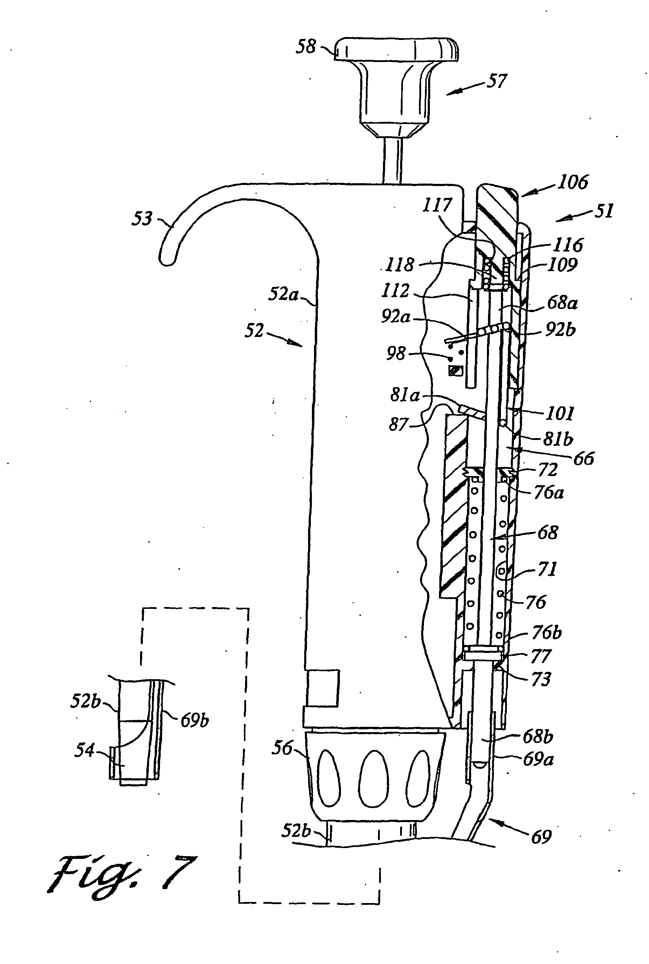

Ejector 67 is movable in a direction parallel to the longitudinal axis of pipette 51 between a first or upper position for permitting a pipette tip 41 to be securely mounted on shaft distal end portion 54, shown in FIG. 2, and a second or lower position for pushing the pipette tip off of the shaft 52b, shown in FIGS. 1 and 7. In this regard, at least a portion of ejector rod 68 is slidably disposed within a cylindrical vertically-extending bore 71 provided in a side of handle 52a opposite the finger hook 53. The rod 68 is positioned within the bore 71 and handle 52 by means of an upper rod retainer or bushing 72 and a lower flange 73 which each extend inwardly into the bore 71 so as to vertically receive and guide the rod 68. Movement of ejector 67 to its upper position is limited by the engagement of extension proximal end portion 69a with lower flange 73 (see FIG. 2) Compressible spring means or a spring in the form of helical spring 76 is carried within handle 52a of housing 52 and is preferably concentrically disposed about at least a portion of rod 68. Spring 76 may have a spring constant ranging from about 1401-14010 N/m (8 to 80 lbs/in) and preferably ranging from 2102-8756 N/m (12 to 50 lbs/in).

Pipette 51 has means which includes a flange member or collar 77 for compressing the eject spring 76 so as to store energy in the spring. Means is provided for securing the collar 77 to rod 68 and in this regard the collar 77 can be formed integral with the rod 68. Eject spring 76 is disposed between rod retainer or bushing 72 and collar 77 and, more specifically, has a first or upper end portion 76a seated against bushing 72 and a second or lower end portion 76b seated against collar 77. Each of the bushing 72 and collar 77 are provided with an annular groove for receiving the respective end portion of eject spring 76. The spring 76 is in a slightly compressed state, as shown in FIG. 7, when ejector 67 is in its lower position. This initial compression inhibits spring rattle. Movement of ejector 67 to its upper position causes eject spring 76 to compress, as shown in FIG. 2. Bushing 72 is removable from housing 52 to permit placement of spring 76 and collar 77 within bore 71 during assembly of pipette 51, yet can be rigidly secured to handle 52a so as not to be dislodged during compression of eject spring 76.

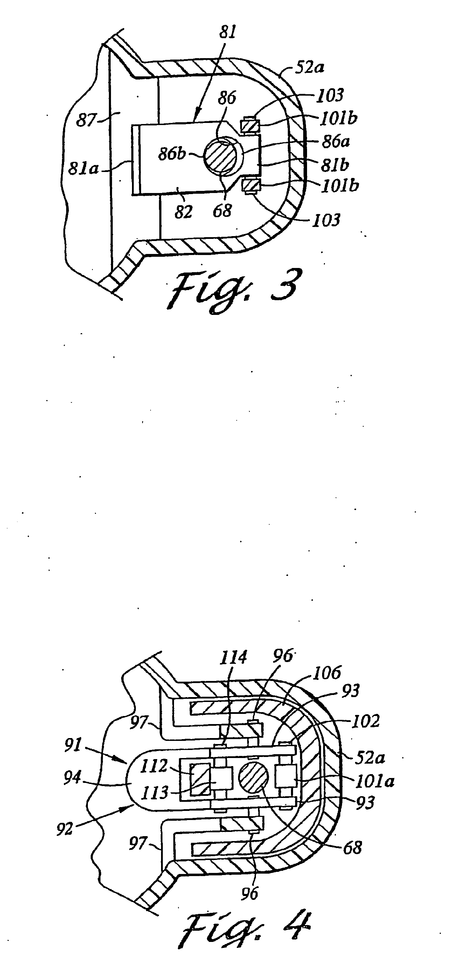

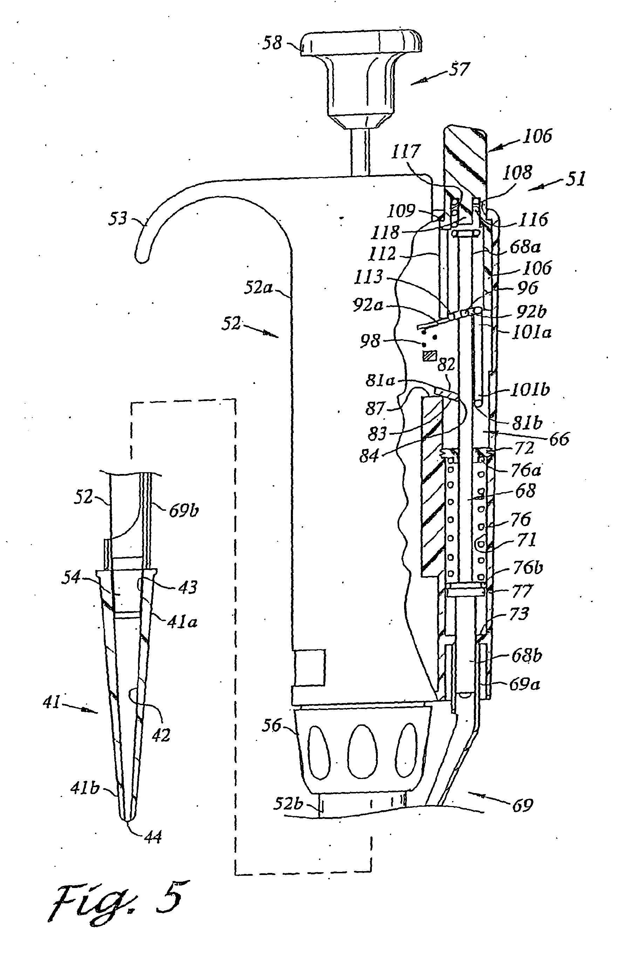

The ejector assembly 66 includes locking means carried by housing 52 for retaining eject spring 76 in its compressed position (see FIGS. 1-3). A plate member or friction brake member 81 is included within the locking means and has first and second end portions 81a and 81b. The brake member or brake 81 has a first or upper planar surface 82 and a second or lower planar surface 83 extending parallel to surface 82 and is provided with a circular-shaped bore 84, shown in FIG. 5, formed by an inner cylindrical surface 86 extending perpendicularly between the upper and lower surfaces 82 and 83. Pipette housing 52 has an internal ledge 87 upon which the first or free end portion 81a of the brake sits. Brake 81 is pivotable about ledge 87 between a first or unlocked position shown in FIGS. 5-7 for permitting rod 68 to move freely in either an upward or downward direction relative to brake 81 and housing 52 and a second or locked position shown in FIGS. 1 and 2 in which the brake 81 restricts the rod 68 from moving downwardly within housing 52 regardless of the strength of eject spring 76. When brake 81 is in its locked position, diametrically opposed portions 86a and 86b of inner surface 86 frictionally engage the outer surface of rod 68 for restricting downward movement of the rod relative to the brake (see FIG. 2 and 3).

The ejector assembly 66 further includes release means for releasing brake 81 relative to rod 68. The release means, preferably in the form of finger actuatable means, includes a release means or assembly 91 for pivoting brake 81 between its locked and unlocked positions relative to ledge 87 (see FIGS. 1, 2 and 4). A U-shaped member 92 having first and second arms 93 extending in parallel spaced-apart positions from a plate portion 94 is included within release assembly 91. Anns 93 extend along opposite sides of rod 68 and are spaced from the rod so that the rod 68 is movable upwardly and downwardly between arms 93 free of U-shaped member 92. U-shaped member 92 is pivotably carried within handle 52 by means of first and second pins 96 extending along a pivot axis disposed perpendicularly of rod 68. Each of the pivot pins 96 has a first or inner end pivotably secured by any suitable means to one of arms 93 and a second or outer end secured to housing 52 by one of first and second L-shaped brackets 97 or any other suitable means (see FIG. 4). Each of the brackets 97 has a first end portion joined to the inside of handle 52a and a second end portion that extends alongside the respective arm 93. Pivot pins 96 permit U-shaped member 92 to pivot between a first or home position, shown in FIGS. 1 and 2, in which the U-shaped member extends perpendicularly of rod 68 and a second or actuated position, shown in FIGS. 5-7, in which the U-shaped member is disposed at an oblique angle relative to the rod 68. Means in the form of a second spring 98 is included within release assembly 91 for urging U-shaped member 92 to its home position. Second or return spring 98 has a first or upper end portion which seats against the underside of plate portion 94 and a second or lower end portion which seats in an annular recess provided in housing 52. The return spring 98 is preloaded so as to be partially compressed when U-shaped member 92 is in its home position. Movement of the U-shaped member to its actuated position results in axial compression of the spring 98.

A Y-shaped linking member or link 101 made from metal or any other suitable material serves to secure U-shaped member 92 to brake 81 (see FIGS. 1-4). The link 101 has a first or upper end portion 101a which extends between arms 93 and is pivotably secured to the arms 93 by means of a pivot pin 102 extending through link upper end portion 101 a and each of the arms 93 (see FIGS. 1 and 4). Link 101 has a distal end portion in the form of first and second spaced-apart distal arms 101b which extend from the upper portion 101a. The distal arms 101b extend along each side of the second end portion 81b of the brake 81 and are pivotably secured to the brake by means of one or more pivot pins 103 secured to the link 101 and brake 81 in a conventional manner (see FIGS. 1 and 3). The rigid link 101 causes brake 81 to move to its second or release position when U-shaped member 92 is moved to its second or actuated position (see FIG. 5). Conversely, return of the U-shaped member 92 to its first or home position, under the force of return spring 98, results in the movement of brake 81 to its first or locked position about ejector rod 68 (see FIGS. 1 and 2). Brake 81 and U-shaped member 92 are each made from any suitable material such as metal.

The finger actuatable means of ejector assembly 66 has a finger operable button 106 made from plastic or any other suitable material slidably carried by housing handle 52a (see FIGS. 1 and 2). The button 106 has an inclined upper surface 107, which is engageable by the thumb of the user's hand to depress and thus operate the button, and extends through an opening 108 provided in the top surface of the housing 52. Button 106 is movable from its disengaged or home position, shown in FIGS. 1 and 2, to a first actuation or tip ejection position for releasing brake 81, shown in FIG. 5, and to a second actuation or tip ejection position for manually depressing rod 68; shown in FIG. 7. An annular surface 109 on the button 106 engages housing 52 for limiting the upward movement of the button 106 relative to the housing 52.

Button 106 includes a depending portion or cam member 112 that extends downwardly into housing 56 along one side of proximal end portion 68a of rod 68 for moving U-shaped member or cam follower 92 from its home position to its actuated position. The strip-like cam member or cam 112, shown in cross section in FIG. 4, engages a roller 113 disposed between first and second arms 93 of cam follower 92. Roller 113 is pivotably connected to arms 93 by means of a pin 114 having opposite end portions secured to respective arms 93 in a conventional manner. Means in the form of a return spring 116 is provided for urging button 106 to its home or disengaged position shown in FIGS. 1 and 2. The return spring 116 has a first or upper end portion seated within an annular recess 117 provided in the underside of button 106 and a second or lower end portion seated in an annular recess provided atop the proximal end portion 68a of rod 68. During movement of button 106 to its first actuation position, cam 112 engages roller 113 as shown in FIG. 2 and causes the roller 113 to move downwardly and towards rod 68. Plate portion 94 of cam follower 92 pivots downwardly or counterclockwise with roller 113 against the force of return spring 98 causing link 101 secured to arms 93 to move upwardly and thus pivot brake 81 counterclockwise in FIG. 5 to its disengaged position. Once roller 113 has pivoted towards rod 68 to a point where cam 112 is tangential to the outer cylindrical surface of the roller, further depression of button 106 causes cam 112 to rollably engage the roller 113 and not further pivot plate portion 94 downwardly. Annular recess 117 defines a post 118 depending from the center of button 106 which facilitates retention of the upper end portion of spring 116 within button 107.

In operation and use, a pipette tip 41 is mounted on distal end portion 54 of housing 52 in a conventional manner. For example, the user grasps housing handle 52a and directs the distal end portion 54 into proximal opening 43 of a pipette tip 41. The tip 41 is typically seated in a tip rack vertically supporting a plurality of pipette tips. The user presses downwardly on the handle 52a with his or her arm and shoulder muscles to force the distal end portion 54 into tip proximal end 41a until a suitable press fit between the tip 41 and pipette 51 is provided for retaining the tip on the pipette. During this mounting step, tip proximal end 41a engages extension collar 69b to move ejector 67 upwardly relative to housing 52 from the first or lower position of ejector 67, shown in FIG. 1, to the second or upper position of the ejector, shown in FIG. 2. Such retraction of ejector 67 into housing handle 52a causes eject spring 76 to compress and thus store as potential energy a portion of the force utilized to mount pipette tip 41 onto pipette 51. As previously described, the ejection spring 76 is retained in its compressed condition by the locking means, which includes brake 81.

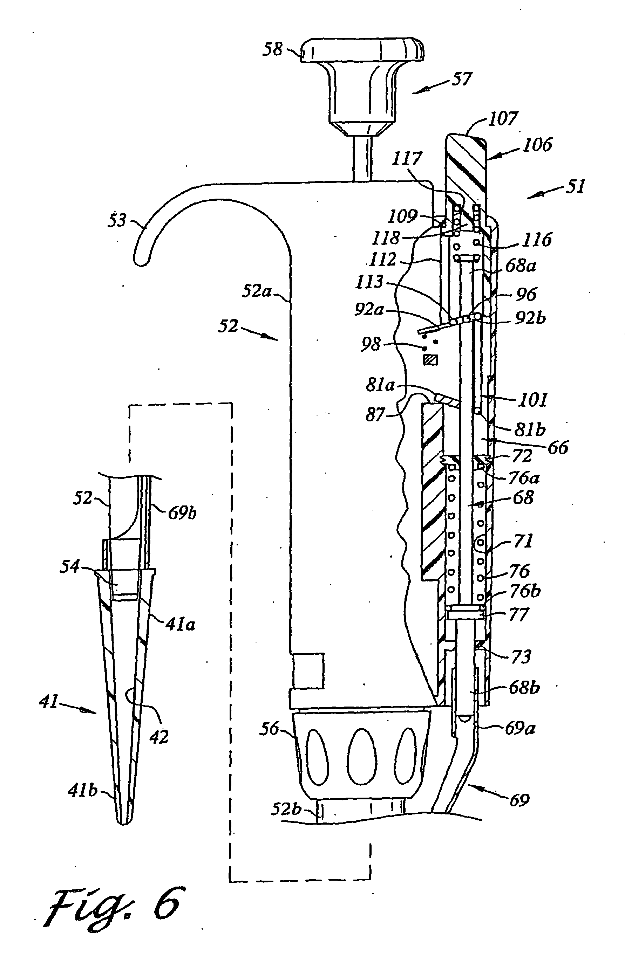

After pipette 51 and tip 41 have been utilized by the user to aspirate and dispense liquid in a conventional manner, the tip 41 can be removed from distal end portion 54 by the user pressing downwardly on button 106 with his or her thumb. In the first step of the tip ejection sequence, as discussed above, the downward movement of button 106 relative to housing 52 causes cam 112 to engage cam follower 92 to release brake 81 and permit ejector 67 to move downwardly in housing handle 52a under the force of the released ejection spring 76. FIG. 5 depicts button 106 in its first actuation or partially depressed position where plate portion 94 of the cam follower 92 has been depressed so as to cause brake 81 to pivot upwardly or counterclockwise and release ejector 67. In the second step of the tip ejection sequence, ejector 67 is forced downwardly in housing handle 52a under the force of the eject spring 76 from its fully retracted position, shown in FIG. 5, to an extended or lower position, shown in FIG. 6. Such downward movement of ejector 67 causes rod distal end portion 68b to move pipette tip 41 downwardly on shaft distal end portion 54. During the tip ejection sequence, button 106 is continually urged upwardly relative to handle 52a by return spring 116.

Normally, the stored energy and force from eject spring 76 is sufficient to push the pipette tip 41 off of the shaft 52b. If pipette tip 41 has not been fully pushed off shaft distal end portion 54 by the force of eject spring 76, the user can further depress button 106 so as to cause center post 118 of the button to engage proximal end portion 68a of rod 68 and thus manually move the rod further downwardly from its position in FIG. 5 or FIG. 6 until collar 77 engages housing lower flange 73. As discussed above, cam 112 rollably engages roller 113 during this further depression of button 106. Collar 77 limits the downward movement of the ejector 67 within housing 52. When the collar 77 engages flange 73, ejector 67 is in its lowermost position relative to housing 52. Following ejection of pipette tip 41, the user releases button 106 which results in return spring 116 causing the button to move upwardly through opening 108 to a fully extended or home position shown in FIG. 1.

As can be seen, ejector assembly 66 permits a portion of the energy utilized to mount the pipette tip 41 on pipette 51 to be stored within eject spring 76 for later use in ejecting the pipette tip from the pipette. Such stored energy, typically provided by the arm and shoulder muscles of the user, decreases the amount of force exerted by the user on button 106 during the tip ejection sequence, thus reducing the risk of repetitive stress injuries to the user's thumb, wrist and/or fingers.

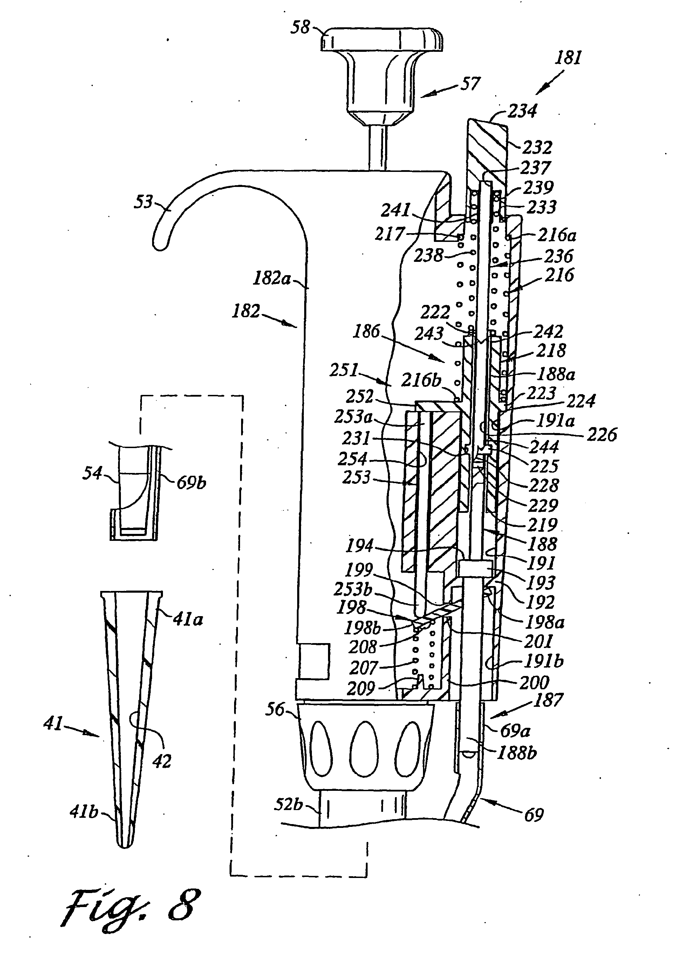

A further embodiment of a pipette utilizing stored energy is shown in FIGS. 8-12. The pipette 181 illustrated therein is substantially similar to pipette 51 and like reference numerals have been used to describe like components of pipettes 181 and 51. Pipette 181 is for use with tip 41 and has a housing 182 substantially similar to housing 52. A first extremity or handle portion 182a having a size and shape the same as housing handle 52a of pipette 51 and a second extremity or shaft 52b are included within housing 52. An ejector assembly 186 is carried by the housing for pushing tip 41 off of the distal end of the shaft 52b and includes an eject spring 216 which is compressed by a piston 218 under the force of an ejector 187 when a user mounts a tip 41 onto the distal end portion of the shaft 52b. The ejector assembly further includes release means actuatable by the user to release the piston 218 relative to the ejector 187. The piston is driven by the compressed eject spring 216 across an acceleration gap to impact a surface of the ejector 187 and cause the ejector to then push the tip 41 off of the distal end of th shaft 52b.

The ejector assembly 186 includes an ejector mechanism or ejector 187 having a first extremity or rod 188 and a second extremity or extension 69. The eject rod 188 is substantially cylindrical in shape and has a first or proximal end portion 188a and a second or distal end portion 188b. Rod 188 is made from metal or any other suitable material. Extension proximal end portion 69a is secured to rod distal end portion 188b in the manner discussed above with respect to pipette 51.

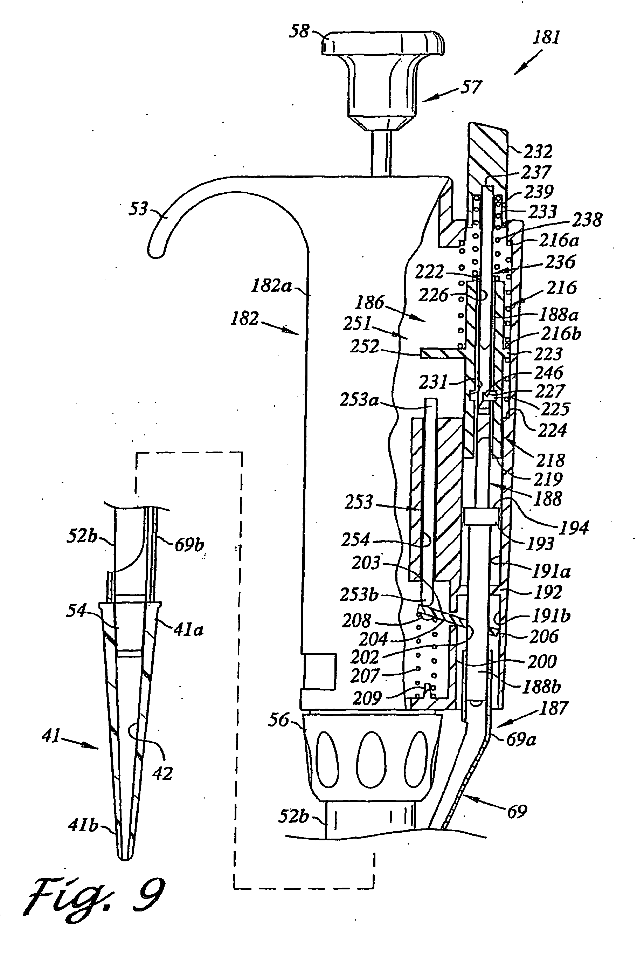

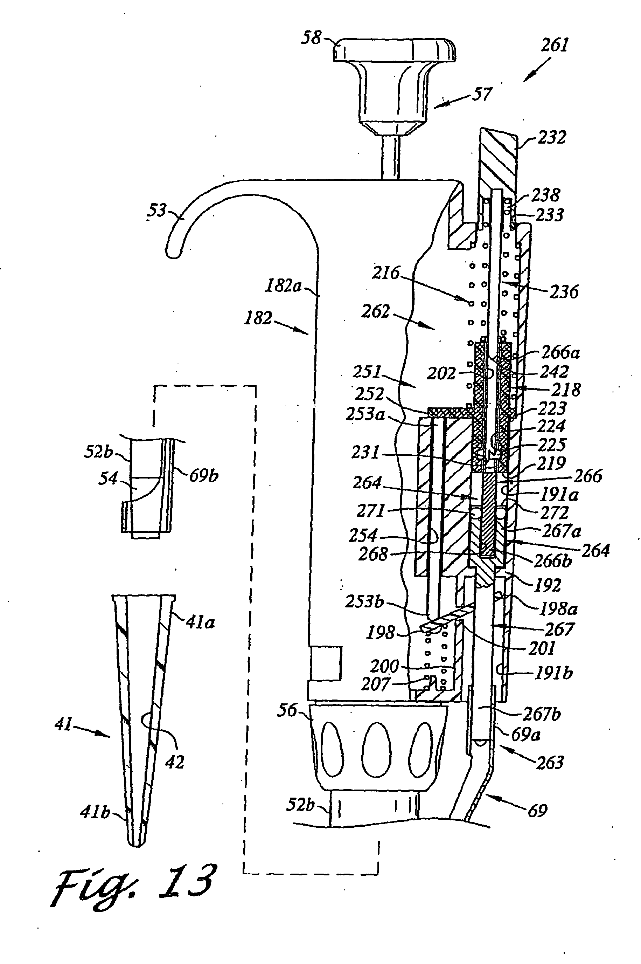

Housing handle 182a is provided with a vertically-extending bore 191 extending along an axis parallel to the longitudinal axis of pipette 181 for slidably receiving rod 188. A flange 192 extends inwardly into bore 191 to slidably engage and guide rod 188 and divide the bore into an upper portion 191 a and a lower portion 191 b. Rod 188 is formed with an integral collar 193 having an annular, upper surface 194 which serves as an impact surface. Ejector 187 is vertically movable in a direction parallel to the longitudinal axis of pipette 181 between a first or upper position, shown in FIG. 9, for permitting pipette tip 41 to be mounted to shaft distal end portion 54 and a second or lower position, shown in FIG. 13, for pushing the pipette tip off of the shaft 52b. The engagement of collar 193 with flange 192 limits the downward movement of rod 188 and thus ejector 187 relative to housing 182.

Locking means is included within pipette 181 for locking ejector 187 in its upper most position. Such locking means includes a plate member or friction brake member 198 which is substantially similar to brake 81 and made from metal or any other suitable material. The brake member or brake 198 extends through an internal opening 199 provided in housing wall 200 and has a first end portion 198a disposed in bore lower portion 191b and an opposite second end portion 198b disposed inside housing 182 alongside the bore 191. Brake 198 pivotably rests upon a ledge 201 formed in the internal wall 200 and created by the opening 199 in the wall 200. A bore 202 extends perpendicular between the upper and lower planar surfaces 203 and 204 of brake 198. The circular-shaped bore 202 is substantially similar to bore 84 discussed above and is formed by an inner surface 206 having braking portions 206a and 206b for frictionally engaging rod distale portion 188b when ejector 187 is in its upper position shown in FIG. 9. The brake 198 is pivotable upon ledge 201 between its first or locked position of FIG. 9, for restricting downward movement of rod 188 within housing 182, and its second or unlocked position shown in FIG. 8, for permitting such downward movement of the rod. Rod 188 can move upwardly through bore 202 when brake 198 is in either of its locked or unlocked positions. A helical spring 207 is provided in housing 182 for urging brake 198 towards its locked position. Brake spring 207 has a first or upper end portion seated about a semi-spherical protuberance 208 formed on the bottom of brake second end portion 198b and a second or lower end portion extending over a stud 209 extending upwardly from the bottom wall of housing handle 182a.

Compressible spring means or spring 216 is carried within housing 182 and included within ejector assembly 186. The eject spring 216 has a first or upper end portion 216a disposed against housing 182 and a second or lower end portion 216b concentrically disposed about a portion of rod 188 and coupled to the ejector 187. An annular recess 217 is provided in the upper portion of housing 182 for seatably receiving spring end portion 216a. Spring 216 may have a spring constant ranging from about 17.1 to 3502 N/m (0.1 to 20 lbs/in) and preferably ranging from 87.6-350 N/m (0.5 to 2 lbs/in).

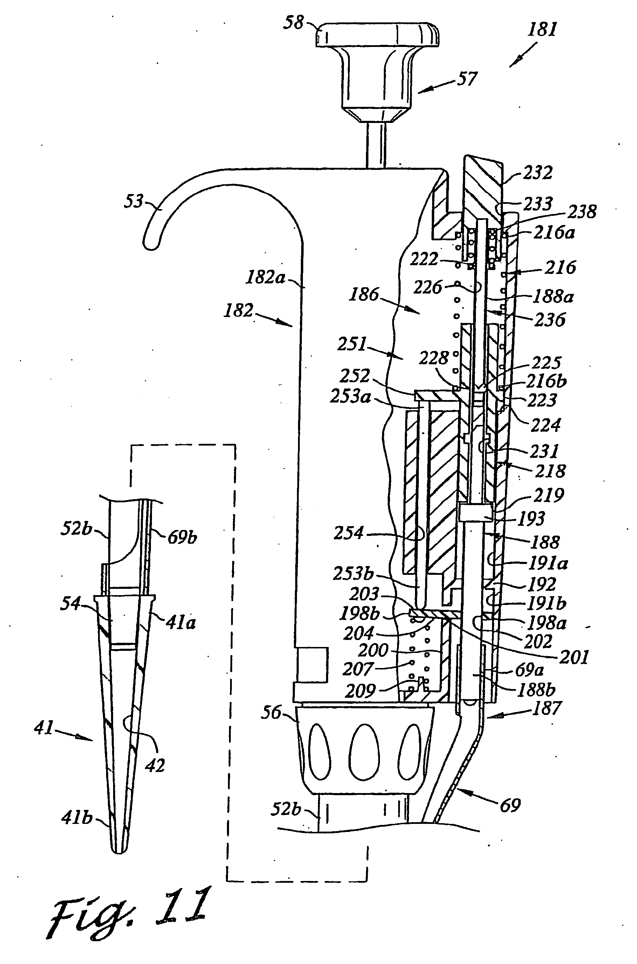

A piston member 218 is included within the means of pipette 181 for compressing eject spring 216 so as to store energy in the spring 216 for facilitating removal of a pipette tip 41 mounted to shaft distal end portion 54. Preferably, the piston 218 is tubular, made from metal or any other suitable material and has a lower surface 219. The piston 218 is longitudinally moveable on rod 188 between a first or upper position in which lower surface 219 is spaced apart from impact surface 194, as shown in FIG. 4, and a second or lowerposition relative to rod 188 in which the piston is in contact with collar 193, as shown in FIG. 11. The distance between piston lower surface 219 and collar impact surface 194 when the piston 218 is in its upper position is referred to herein as the acceleration gap and may range from about 2.54 to 1.27 mm (0.1 to 0.5 inch) and is preferably approximately 7.62 mm (0.3 inch). An annular lip 222 is formed at the top of rod 188 for limiting the upward movement of piston 218 relative to the rod. Spring lower end portion 216b is concentrically disposed about the upper portion of piston 218 and seats against an annular external flange member or flange 223 formed integral with the piston. The upward movement of rod 188 or piston 218 within housing 182 causes flange 223 to compress eject spring 216. A ledge 224 is provided in housing handle 182a. The underside of piston flange 223 engages the ledge 224, as shown in FIG. 8, to limit the downward movement of the piston 218 within housing 182 during movement of rod 188 to its lower position.

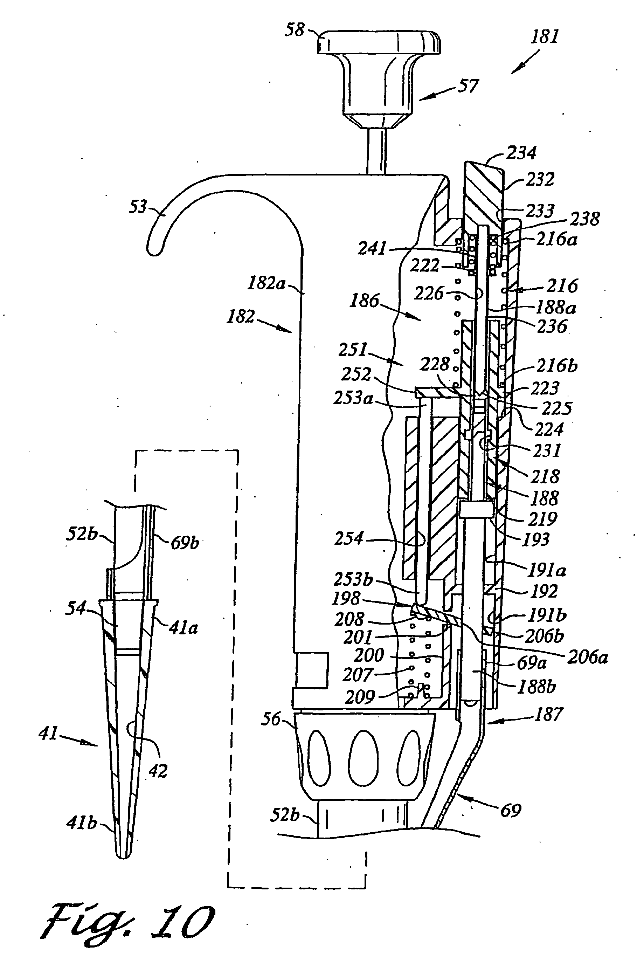

Secondary or additional locking means is included within pipette 181 for retaining eject spring 216 in its compressed position. Such locking means can be in the form of a spring-biased pin 225 which serves to retain piston 218 in its upper position relative to rod 188. The rod 188 is formed with a longitudinally-extending bore 226 which extends through annular lip 222 into proximal end portion 188a of the rod. Pin 225 extends from the bottom of bore 226 through an opening 227 provided in the cylindrical wall of rod 188 forming bore 226. The pin is movable relative to rod 188 between a first or retracted position in which the pin 225 is substantially recessed within opening 227, as shown in FIG. 10, and a second or extended position which the pin 225 extends radially outwardly from the rod 188, as shown in FIG. 8.
A spring in the form of leaf spring 228 extends upwardly from the base of bore 226 and has an end which engages 225 to urge the pin towards its extended position. Leaf spring 228 is secured within the bore 226 by a block 229 which is press fit into the base of bore 229 or secured therein by any other suitable means. The pin 225 cooperates with an annular recess or groove 231 provided in the inner cylindrical surface of tubular piston 218 when in its extended or locking position.

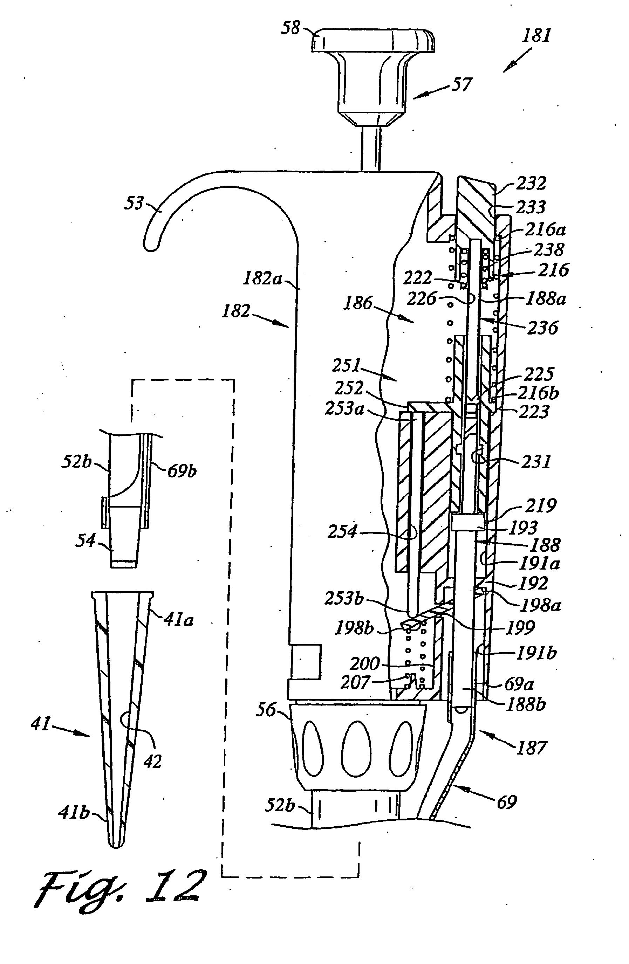

Finger actuatable means is included within pipette 181 for releasing pin 225 from groove 231 so as to permit longitudinal movement of rod 188 within housing 182. Such finger actuatable means includes a button 232 made from plastic or any other suitable material. The button 232 is slidably disposed within housing 182 for movement in a vertical direction along the longitudinal axis of ejector rod 188 and extends upwardly through an opening 233 at the top of housing 182. An inclined surface 234 is provided at the top of button 232 for facilitating actuation by depression by a thumb of a user. The button is longitudinally movable between a first or upper position shown in FIGS. 8 and 9 and a depressed position shown in FIG. 12.

An elongate member or trigger rod 236 made from metal or any other suitable material is secured to the bottom of button 232. In this regard, the top end portion of trigger rod 236 is secured within an axial bore 237 formed in the bottom of the button. Trigger rod 236 extends downwardly from button 232 for slidable disposition within bore 226 of rod 188. In this manner, the button 232 is movable in a longitudinal direction relative to the rod 188. The slidable engagement of the trigger rod 236 with rod 188 serves to guide the button 232 in its longitudinal movement relative to rod 188 and housing 182. A spring in the form of helical spring 238 is disposed between rod 188 and button 232 for urging the button to return its upper or extended position relative to handle 182a. The return spring 238 is concentrically disposed about the upper portion of trigger rod 236 and has a first or upper end portion seated within an annular recess or opening 239 formed in the bottom of button 232 and a second or lower end portion disposed within an annular recess provided in the top of rod annular lip 222. Annular opening 239 defines a center post 241 at the bottom of button 232 from which trigger rod 236 depends. Trigger rod 236 has a pointed lower end 242 formed in part by an inclined surface 243 for engaging a groove 244 formed in the side of pin 225. Tapered groove 244 is formed in part by an inclined surface or ramp 246. When ejector 187 is in its upper position and piston 218 is longitudinally locked with the ejector 187 by means of pin 225, depression of button .232 to its lowermost position causes pointed end 242 of the trigger rod 236 to retract pin 225 from annular groove 231. In this operation, inclined surface 243 of the pointed end 242 engages ramp 246 on pin 225 to move the pin radially inwardly against the force of leaf spring 228.

Pipette 181 includes a release mechanism or assembly 251 actuatable by button 232 for moving brake 198 from its locked position to its unlocked or released position so as to permit ejector 187 to move downwardly to its lower position. A plate-like extension 252 extending radially from flange 223 on one side of piston 218 is included within release assembly 251. Extension 252 is preferably formed integral with flange 223. An elongate rod 253 slidably disposed within a bore 254 extending through housing handle 182 in a direction parallel to the longitudinal axis of the housing 182 is further included within release assembly 251. Push or release rod 253 has a first or upper end portion 253a and a second or lower end portion 253b. The upper end portion 253a is engageable by extension 252 when piston 218 is released by trigger rod 236 from its upper position. Lower end portion 253b of the push rod 253 rests upon upper surface 203 of brake second end portion 198b. Movement of piston 218 from its upper longitudinal position to its lower longitudinal position on eject rod 188 causes extension 252 to engage and move the push rod 253 downwardly so that the lower end portion 253b of the push rod urges brake second end portion 198b downwardly against the force of brake spring 207 and thus releases the brake.

Operation and use of pipette 181 will now be described. When the pipette 181 is in its at-rest position, as shown in FIG. 8, piston 218 is longitudinally locked to rod 188 by pin 225 and ejector 187 is in its lower position with collar 193 engaging flange 192. Return spring 238 urges button 232 and trigger rod 236 towards their respective upper positions within housing handle 182a and urges rod 188 to its lower position to ensure that locking pin 225 is engaged or ledge 224. Brake 198 is in its released position and button 232 is in its upper or home position fully extended from the top of housing 182. The user grasps housing handle 182a and mounts pipette tip 41 to shaft distal end portion 54 in a manner discussed above with respect to pipette 51. In such mounting step, the proximal end 41 a of the pipette tip engages shaft distal end portion 54 and pushes ejector 187 from its lower position, shown in FIG. 8, to its upper position, shown in FIG. 9. Such longitudinal movement of ejector 187 results in piston flange 223 compressing eject spring 216. As rod 188 moves to its upper position, extension 252 moves upwardly to permit brake spring 207 to pivot brake 198 in a clockwise direction towards its locked position. The components of ejector assembly 186 are longitudinally sized so that brake 198 is pivoted to its locked position before rod 188 reaches its upper position (see FIG. 10). In this manner, a portion of the energy utilized to mount the pipette tip 41 onto pipette 181 is stored in the compressed eject spring 216.

After completion of the aspiration and dispensing procedure utilizing pipette tip 41, the tip 41 can be ejected from the distal end of pipette 181 by depressing button 232. As the button 232 is depressed against the relatively weak force of return spring 238, trigger rod 236 advances down piston bore 226 towards pin 225. In the manner discussed above, pointed end 242 of the trigger rod 236 engages ramp 246 in the pin 225 to retract the pin and thereby longitudinally release piston 218 from rod 188 (see FIG..10). Upon such release, lower surface 219 of the piston 218 accelerates under the force of eject spring 216 towards impact surface 194 on rod 188. Extension 252 engages upper end portion 253a of push rod 253 as piston 218 moves towards collar 193 to trigger movement of brake 198 to its released position. As discussed above, push rod 253 is moved downwardly by extension 252 under the force of eject spring 216 to pivot the brake 198 in a counterclockwise direction about ledge 201 against the restoring force of spring 207. The eject spring 216 has a spring constant which is greater than the spring constant of brake spring 207, and is preferably substantially greater than the spring constant of spring 207. As a result, the force of the eject spring 216 is sufficient to overcome the restoring force of the brake spring 207. The various components of ejector assembly 186 are sized so thai brake 198 releases ejector 187 sometime before piston lower surface 219 engages impact surface 194, as shown in FIG. 11. Ejector 187 provides an initial ejection force to pipette tip 41 sufficient to overcome the static friction force retaining the pipette tip on shaft distal end portion 54. Thereafter, piston 218 and eject spring 216 drive ejector 187 further downwardly relative to housing handle 182a to cause extension 69 to push pipette tip 41 distally on the end portion 54 (see FIG. 12). If insufficient energy is provided by the piston 218 to completely remove tip 41 from the pipette 181, the user can further depress button 232, which remains in physical engagement with eject rod 188 so long as the user retains his or her thumb on the button, to cause post 241 to manually depress ejector 187 and thus remove the tip 41 from the pipette 181. As can be seen, the invention is broad enough to cover a pipette having insufficient stored energy to push a tip 41 completely off of the pipette but sufficient to overcome the peak static friction force retaining the tip on the pipette.

After removal of pipette tip 41, the user releases button 232 so as to cause the button to return to its home position under the force of return spring 238 and likewise cause eject rod 188 to return to its lower position. This relative longitudinal separation of button 232 and eject rod 188 causes pointed end 242 of trigger rod 236 to retract from pin groove 225 and thus release locking pin 225. Eject spring 216 retains piston 218 in its lower position against ledge 224 after the release of button 232. The disposition of piston 218 and rod 188 in their respective lower positions causes the now released pin 225 to align and extend into the annular groove 231 in piston 218 and thereby longitudinally lock together the piston 218 and the rod 188 (see FIG. 8).

Pipette 181 incorporates features from both of pipettes 51 and 126. The energy for accelerating piston 218 is stored in eject spring 216 and supplied by the user's arms and shoulders when mounting the tip 41 onto the pipette 181. Little energy is required by the user to actuate removal of the pipette tip 41. The user merely depresses button 232 against the relatively weak force of return spring 238 to retract locking pin 225 against the relatively weak force of leaf spring 228. In addition, the acceleration of piston 218 across the gap between piston lower surface 219 and the collar impact surface 194 provides an initial impact force on the pipette tip 41 which facilitates removal of the tip from pipette 181 and provides for an energy efficient system.

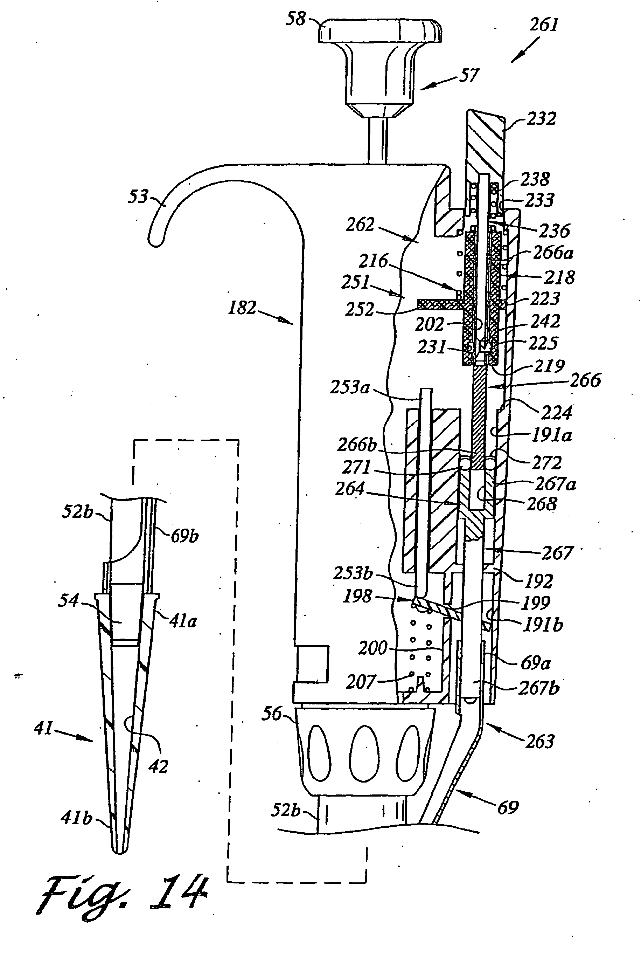

In certain applications for the pipette of the present invention, it is desirable to increase the acceleration gap, that is the distance a piston travels under the force of an eject spring before engaging the impact surface of an ejector, in order to convert a greater portion of the stored energy in the eject spring into piston momentum. One such embodiment of a pipette having an increased acceleration gap is shown in FIGS. 13 and 14. Pipette 261 therein is substantially similar to pipette 181 and like reference numerals have been used to describe like components of pipettes 261 and 181. An ejector assembly 262 is carried by housing 182 and includes an ejector 263 having first and second telescoping members 266 and 267 for pushing a tip 41 off of the distal end of the housing shaft 52b. An eject spring 216 is compressed by a piston 218 under the force of the ejector 263 when a user mounts a tip 41 onto the distal end portion of the shaft 52b. When released by the user, the piston is driven by the compressed eject spring 216 across an increased acceleration gap made possible by the telescoping together of first and second members 266 and 267 to impact a surface of the ejector 263 and cause the ejector to then push tip 41 off of the shaft 52b.

More specifically, the ejector mechanism or ejector 263 is substantially similar to ejector 187 and includes a first extremity or rod assembly 264 and a second extremity or extension 69. Rod assembly 264 is comprised of first and second telescoping members in the form of a first or upper rod 266 and a second or lower rod 267 each made from metal or any other suitable material. Upper rod 266 is substantially cylindrical in shape and has a first or proximal end portion 266a and a second or distal end portion 266b. The proximal end portion 266a is substantially identical to proximal end portion 188a of rod 188 and like reference numerals have been used to describe like components of proximal end portions 266a and 188a. Lower rod 267 has a first or proximal end portion 267a and a second or distal end portion 267b. The proximal end portion 267a is substantially cup shaped in conformation and is provided with an axially-extending bore 268 therein for receiving distal end portion 266b of the upper rod 266. Distal end portion 267b of the lower rod is substantially identical to distal end portion 188b of eject rod 188 and is secured to extension proximal end portion 69a in the manner discussed above. Lower rod portion 267a has an upper surface 272 which serves as an impact surface.

Upper rod 266 is longitudinally movable relative to lower rod 267 between a first or captured position, as shown in FIG. 13, in which distal end portion 266b is seated within proximal end portion 267a of the lower rod and a second or extended position relative to the lower rod 267, shown in FIG. 14. A plurality of roller bearing means or balls 271, two of which are shown in FIGS. 13 and 14, are circumferentially mounted about proximal end portion 267a for rollably engaging the upper rod 266. More specifically, the balls 271 are embedded in lower rod portion 267a and engage the inner cylindrical surface of housing 182 that forms bore upper portion 191a on the outside of lower rod portion 267a and the outer cylindrical surface of upper rod portion 266b on the inside of the lower rod portion 267a. It is desirable that the balls 271 not slip relative to either of rods 266 and 267. Accordingly, the balls 271 are force fit between the housing 182 and upper rod 266 and are made from any suitable material that inhibits slipping of rod 266 relative to the balls under the force of eject spring 216.

In an alternate embodiment, the balls 271 may be replaced by spur-like gears secured to turn on horizontal shafts connected to lower rod portion 267a to engage and ride up and down on gear surfaces provided on the inner surface of the bore 191a and on the outer surface of the rod portion 266b.

Tubular piston 218 of pipette 261 is moveable relative to lower rod 267 between a first or upper position, shown in FIG. 14, in which the piston is spaced apart from the lower rod 267 and a second or lower position (not shown) in which lower surface 219 of the tubular piston 218 is in contact with impact surface 272 of the lower rod 267. Movement of the piston 218 to its upper position serves to compress eject spring 216 in the manner discussed above with respect to pipette 181. When piston 218 is so disposed in its upper position, an acceleration or separation gap equal to the distance between piston lower surface 219 and impact surface 272 is provided. Spring 216 in pipette 261 may have a spring constant ranging from about 0.05 to 10 lbs/in and preferably ranging from 0.25 to 1 lb/in. The acceleration gap in pipette 261 may range from about 5.08-25.4 mm (0.2 to 1 inch) and is preferably approximately 15.24 mm (0.6 inch).

The operation and use of pipette 261 is substantially similar to the operation of pipette 181 described above. During mounting of pipette tip 41 onto sliaft distal end portion 54, the pipette tip 41 causes ejector 267 to move from its lower position, shown in FIG. 13, to its upper position, shown in FIG. 14. As lower rod 267 moves upwardly within housing 182 during this mounting step, balls 271 rollably engage the inner surface of bore upper portion 191a so as to cause upper rod 266 to telescope upwardly relative to the lower rod 267. The balls 271 cause upper rod 266 to travel upwardly approximately twice the distance that lower rod 267 travels upwardly within housing 182. Eject spring 216 is compressed under the force of piston 218 during this mounting step.

After completion of the desired aspiration and dispensing procedure utilizing pipette 261, the pipette tip 41 can be pushed off of the pipette by depressing button 232 so as to retract pin 225 and thus release the piston 218 from upper rod 266. The compressed eject spring 216 accelerates the piston downwardly across the separation gap between the piston 218 and impact surface 272 causing extension 252 to engage release rod 253 and thereby release brake 198 just before the piston engages impact surface 272..The relatively high initial force generated_by the piston on ejector 263 overcomes the static friction force between the pipette tip 41 and shaft distal end portion 54 to facilitate removal of the pipette tip from the shaft 52b.

Telescoping assembly 264 provides a coaxial 1:2 lift mechanism which approximately doubles the acceleration gap between piston 218 and impact surface 272, thereby reducing the eject force required from the eject spring 216. This larger acceleration gap allows eject spring 216 to accelerate piston 218 a greater distance so as to increase the piston's momentum and the resulting impact force provided by the piston 218 on the lower rod 267. The peak ejection force supplied by rod 267 to tip 41 is, for a given spring constant, greater than the ejection force created by a pipette, such as pipette 181, having a shorter acceleration gap. Other mechanisms or assemblies can also be provided for creating an acceleration or separation gap that permits an impact force. For example, rotary impact using gears can be provided.

It should be appreciated that other pipettes can be provided which utilize greater than one to one lift between the eject rod and the piston-like member, such as the 1:2 lift between lower rod 267 and piston 218 of pipette 261, and be within the scope of the present invention. For example, such greater than one to one lift can be provided by pulleys and belts, gears, cams and/or levers.

The pipettes of the present invention can be automated and/or electronically controlled.

Although the compressible spring means of the present invention has been shown as being a helical spring, it should be appreciated that other types of springs can be used without departing from the scope of the invention. For example, the energy storage spring can be a torsional bar, a gas filled cylinder such as an air spring, or opposing magnetic fields where the stored energy is stored in the magnetic fields of two magnets that are oriented to repel each other.

It should be appreciated that pipettes of the present invention can be other than hand held. For example, the invention is broad enough to cover robotic pipettes which are manually controlled, by means of a computer screen, keyboard, mouse or other suitable means, or automated so as to not include any finger actuatable means. The utilization of stored energy for tip removal in such a robotic pipette advantageously reduces the forces required for tip removal.

From the foregoing, it can be seen that a pipette which stores energy for later use in removing a tip has been provided. A compressible spring means is provided in the pipette for storing such energy. The stored energy can be supplied from mounting the tip onto the pipette, from a user's thumb or fingers and/or from an automated aspirating and/or dispensing of a liquid by the pipette. An impact force can optionally be provided to initiate removal of the tip and the impact force can be created by accelerating a piston-like member across a gap. The pipette can be of a hand-held type which minimizes stresses on the user's thumb or fingers.

## Claims

1. A pipette (51; 181; 261; 281) for use with a pipette tip (41) to aspirate and dispense a quantity of liquid comprising a housing (52; 182; 282), a pipette tip mounting shaft (52b) extending longitudinally from the housing for insertion into an open proximal end of the pipette tip (41) to frictionally mount and retain the tip on a distal end of the shaft (52b) and a user actuated pipette tip ejector assembly (66; 186; 262; 294) including an extremity (69) mounted to move longitudinally relative to the mounting shaft and having a distal end portion (69b) for engaging the proximal end of the pipette tip (41) when frictionally retained on a distal end of the pipette tip mounting shaft and to move longitudinally relative to the shaft and toward the distal end of the shaft to eject the tip from the mounting shaft (52b) by overcoming the frictional retention of the tip on the shaft, the pipette being **characterized by**:
a mechanism that reduces user generated forces required to actuate the pipette tip ejector assembly (66; 186; 262; 294) and eject the pipette tip (41) from the pipette tip mounting shaft (52b) and that comprises:
an energy storage spring (76; 216; 301) which stores energy when the tip is mounted an said shaft and which releases the stored energy when the tip is to be removed to facilitate the removal thereof;
an ejector (67; 187; 263; 296-298, 302) in the pipette tip ejector assembly (66; 186; 262; 294) responsive to the mounting of the tip on a distal end of the shaft for compressing the energy storage spring and storing energy in the spring;
retaining means (81; 198; 316, 323) for retaining the compression of and energy in the energy storage spring (76; 151; 216; 301); and
a release assembly (91; 251; 326) which when the ejector is pushed towards the pipette tip selectively releases the retaining means (81; 198; 316, 323) and the energy from the energy storage spring (76; 151; 216; 301) to the ejector (67; 187; 263; 296-298, 302) to move the ejector against the tip (41) to assist the tip ejector assembly (66; 186; 262; 294) in (i) overcoming the frictional retention of the pipette tip on the mounting shaft and (ii) the ejection of the pipette tip from the mounting shaft.

2. The pipette of claim 1 further **characterized by**: a distal end portion (69b; 134b) of the ejector assembly being **characterized by** a first position which permits the pipette tip (41) to be inserted onto the mounting shaft (52b) and moveable away from the distal end of the shaft with the pipette tip as the tip is inserted onto the distal end of the shaft to a retracted position where it is retained by the retaining means (81; 198; 316; 323) with energy stored in the energy storage spring (76; 151; 216; 301) and upon a release of the retaining means by the release assembly (91; 251; 326) is moveable in response to the energy from the energy storage spring to a second position wherein the pipette tip is ejected from the mounting shaft.

3. The pipette of claim 2 further **characterized by** the retaining means (81; 198; 316, 323) having (i) a locked condition in which energy is stored in the energy storage spring by movement of the pipette tip onto the mounting shaft while blocking movement in an opposite direction relative to the mounting shaft and (ii) an unlocked condition in which energy is released from the energy storage spring to drive the distal end portion (69b; 134b) in a direction which ejects the tip from the mounting shaft.

4. The pipette (181; 261; 281) according to claims 2 or 3 further **characterized by**:
the ejector (67; 187; 263; 296-298, 302)including an impact surface (194; 272; 299) and by the pipette further including a piston (218; 302) responsive to energy released by the energy storage spring for striking the impact surface to assist in driving the pipette tip from the mounting shaft.

## Patentansprüche

1. Pipette (51; 181; 261; 281) zur Verwendung mit einer Pipettenspitze (41) zum Ansaugen und Abgeben einer Flüssigkeitsmenge, umfassend ein Gehäuse (52; 182; 282), einen Pipettenspitzenbefestigungsschaft (52b), der sich von dem Gehäuse zum Einsetzen in ein offenes proximales Ende der Pipettenspitze (41) in Längsrichtung erstreckt, um die Spitze über Reibung an einem distalen Ende des Schaftes (52b) zu befestigen und zu halten, und eine anwenderbetätigte Pipettenspitzenejektoranordnung (66; 186; 262; 294) mit einer Extremität (69), die so befestigt ist, dass sie sich relativ zu dem Befestigungsschaft in Längsrichtung bewegt und einen distalen Endabschnitt (69b) zum Eingriff mit dem proximalen Ende der Pipettenspitze (41) aufweist, wenn diese reibungsbedingt an einem distalen Ende des Pipettenspitzenbefestigungsschaftes gehalten ist, und dass sie sich relativ zu dem Schaft in Längsrichtung und in Richtung des distalen Endes des Schafts bewegt, um die Spitze von dem Befestigungsschaft (52b) durch Überwinden der reibungsbedingten Rückhaltung der Spitze an dem Schaft auszustoßen, wobei die Pipette **gekennzeichnet ist durch**:
einen Mechanismus, der anwendererzeugte Kräfte reduziert, die erforderlich sind, um die Pipettenspitzenejektoranordnung (66; 186; 262; 294) zu betätigen und die Pipettenspitze (41) von dem Pipettenspitzenbefestigungsschaft (52b) auszustoßen, und der umfasst:
eine Energiespeicherfeder (76, 216, 301), die Energie speichert, wenn die Spitze an dem Schaft befestigt ist, und die die gespeicherte Energie freigibt, wenn die Spitze entfernt werden soll, um deren Entfernung zu erleichtern;
einen Ejektor (67; 187; 263; 296 - 298, 302) in der Pipettenspitzenejektoranordnung (66; 186; 262; 294, der auf die Befestigung der Spitze an einem distalen Ende des Schaftes zum Komprimieren der Energiespeicherfeder und zum Speichern von Energie in der Feder anspricht;
ein Haltemittel (81; 198; 316, 323) zum Halten der Kompression und Energie in der Energiespeicherfeder (76; 151; 216; 301); und
eine Freigabeanordnung (91, 251, 326), die, wenn der Ejektor in Richtung der Pipettenspitze geschoben wird, das Haltemittel (81; 198; 316, 323) und die Energie von der Energiespeicherfeder (76; 151; 216; 301) zu dem Ejektor (67; 187; 263; 296 - 298, 302) selektiv freigibt, um den Ejektor gegen die Spitze (41) zu bewegen und die Spitzenejektoranordnung (66; 186; 262; 294) bei (i) der Überwindung der reibungsbedingten Rückhaltung der Pipettenspitze an dem Befestigungsschaft und (ii) dem Ausstoßen der Pipettenspitze von dem Befestigungsschaft zu unterstützen.

2. Pipette nach Anspruch 1, ferner **gekennzeichnet durch**:
einen distalen Endabschnitt (69b; 134b) der Ejektoranordnung, der durch eine erste Position **gekennzeichnet** ist, die ermöglicht, das die Pipettenspitze (41) auf den Befestigungsschaft (52b) aufgesetzt und
von dem distalen Ende des Schaftes mit der Pipettenspitze, wenn die Spitze auf das distale Ende des Schaftes aufgesetzt ist, in eine zurückgezogene Position weg bewegbar ist, in der sie **durch** das Haltemittel (81; 198; 316; 323) mit in der Energiespeicherfeder (76; 151; 216; 301) gespeicherter Energie gehalten ist, und bei einer Freigabe des Haltemittels **durch** die Freigabeanordnung (91; 251; 326) in Ansprechen auf die Energie von der Energiespeicherfeder in eine zweite Position bewegbar ist, in der die Pipettenspitze von dem Befestigungsschaft ausgestoßen ist.

3. Pipette nach Anspruch 2,
ferner **dadurch gekennzeichnet, dass** das Haltemittel (81; 198; 316, 323) (i) einen gesperrten Zustand, bei dem Energie in der Energiespeicherfeder durch Bewegung der Pipettenspitze auf dem Befestigungsschaft gespeichert wird, während eine Bewegung in einer entgegengesetzten Richtung relativ zu dem Befestigungsschaft blockiert ist, und (ii) einen entsperrten Zustand aufweist, bei dem Energie von der Energiespeicherfeder freigegeben wird, um den distalen Endabschnitt (69b; 134b) in einer Richtung anzutreiben, die die Spitze von dem Befestigungsschaft ausstößt.

4. Pipette (181; 261; 281) nach einem der Ansprüche 2 oder 3, ferner **dadurch gekennzeichnet, dass**:
der Ejektor (67; 187; 263; 296 - 298, 302) eine Aufprallfläche (194; 272; 299) aufweist und die Pipette ferner einen Kolben (218; 302) aufweist, der auf Energie anspricht, die von der Energiespeicherfeder freigegeben wird, um auf die Aufprallfläche aufzutreffen und ein Treiben der Pipettenspitze von dem Befestigungsschaft zu unterstützen.

## Revendications

1. Pipette (51 ; 181 ; 261 ; 281), destinée à une utilisation avec une pointe de pipette (41) afin d'aspirer et de distribuer une quantité de liquide, comprenant un boîtier (52 ; 182 ; 282), une tige de montage (52b) pour la pointe de pipette, s'étendant longitudinalement depuis le boîtier en vue d'une insertion dans une extrémité proximale ouverte de la pointe de pipette (41) pour monter et retenir en friction la pointe sur une extrémité distale de la tige (52b), et un groupe éjecteur (66 ; 186 ; 262 ; 294) pour la pointe de pipette, actionné par un utilisateur, qui inclut une extrémité (69) montée pour se déplacer longitudinalement par rapport à la tige de montage et ayant une portion d'extrémité distale (69b) pour engager l'extrémité proximale de la pointe de pipette (41) quand elle est retenue par friction sur une extrémité distale de la tige de montage de pointe de pipette et pour se déplacer longitudinalement par rapport à la tige et en direction de l'extrémité distale de la tige pour éjecter la pointe depuis la tige de montage (52b) en surmontant la rétention par friction de la pointe sur la tige, la pipette étant **caractérisée par** :
un mécanisme qui réduit les forces produites par l'utilisateur qui sont nécessaires pour actionner le groupe éjecteur de pointe de pipette (66 ; 186 ; 262 ; 294) et éjecter la pointe de pipette (41) depuis la tige de montage de pointe de pipette (52b) et qui comprend :
un ressort de stockage d'énergie (76 ; 216 ; 301) qui stocke l'énergie quand la pointe est montée sur ladite tige et qui libère l'énergie stockée quand la pointe doit être enlevée pour faciliter son enlèvement ;
un éjecteur (67 ; 187 ; 263 ; 296-298, 302) dans le groupe éjecteur de pointe de pipette (66 ; 186 ; 262 ; 294) qui réagit au montage de la pointe sur une extrémité distale de la tige pour comprimer le ressort de stockage d'énergie et stocker de l'énergie dans le ressort ;
des moyens de retenue (81 ; 198 ; 316 ; 323) pour retenir la compression et l'énergie dans le ressort de stockage d'énergie (76; 151 ; 216; 301); et
un groupe de libération (91 ; 251 ; 326) qui, quand l'éjecteur est poussé vers la pointe de pipette, relâche sélectivement les moyens de retenue (81 ; 198 ; 316, 323) et l'énergie du ressort de stockage d'énergie (76 ; 151 ; 216 ; 301) vers l'éjecteur (67 ; 187 ; 263 ; 296-298, 302) pour déplacer l'éjecteur à l'encontre de la pointe (41) et assister le groupe éjecteur : (66 ; 186 ; 262 ; 294) afin de (i) surmonter la rétention par friction de la pointe de pipette sur la tige de montage et (ii) l'éjection de la pointe de pipette depuis la tige de montage.

2. Pipette selon la revendication 1, **caractérisée en outre par** une portion d'extrémité distale (69b ; 134b) du groupe éjecteur qui est **caractérisée par** une première position qui permet à la pointe de pipette (41) d'être insérée sur la tige de montage (52b) et déplaçable en éloignement de l'extrémité distale de la tige avec la pointe de pipette lorsque la pointe est insérée sur l'extrémité distale de la tige vers une position rétractée dans laquelle elle est retenue par les moyens de retenue (81 ; 198 ; 316 ; 323) avec l'énergie stockée dans le ressort de stockage d'énergie (76 ; 151 ; 216 ; 301) et, lors d'un relâchement des moyens de retenue par le groupe de libération (91 ; 251 ; 326), est déplaçable en réponse à l'énergie provenant du ressort de stockage d'énergie jusqu'à une seconde position dans laquelle la pointe de pipette est éjectée de la tige de montage.

3. Pipette selon la revendication 2, **caractérisée en outre par le fait que** les moyens de retenue (81 ; 198 ; 316, 323) possèdent (i) une condition bloquée dans laquelle l'énergie est stockée dans le ressort de stockage d'énergie par un mouvement de la pointe de pipette sur la tige de montage tout en bloquant un mouvement dans une direction opposée par rapport à la tige de montage, et (ii) une condition débloquée dans laquelle l'énergie est libérée depuis le ressort de stockage d'énergie pour entraîner la portion d'extrémité distale (69b ; 134b) dans une direction qui éjecte la pointe depuis la tige de montage.

4. Pipette (181 ; 261 ; 281) selon les revendications 2 ou 3, **caractérisée en outre par le fait que** l'éjecteur (67 ; 187 ; 263 ; 296-298, 302) inclut une surface d'impact (194 ; 272 ; 299), et que la pipette inclut en outre un piston (218 ; 302) qui réagit à l'énergie libérée par le ressort de stockage d'énergie pour venir heurter la surface d'impact et assister l'entraînement de la pointe de pipette depuis la tige de montage.
